# EUROPEAN PATENT APPLICATION

(11) **EP 2 418 560 A2**
(43) Date of publication of application: **15.02.2012**
(21) Application number: 11153591.0
(22) Date of filing: 07.02.2011
(51) Int. Cl.: G06F 1/32

(54) **Computer and power control method thereof**

(30) Priority: 09.08.2010 KR 20100076528
(71) Applicant: Samsung Electronics Co., Ltd., Suwon-si, Gyeonggi-do 442-742 (KR)
(72) Inventor: Lee, Dong-geun, Gyeonggi-do (KR); Lee, Byung-lae, Gyeonggi-do (KR)
(74) Representative: Brandon, Paul Laurence

(57) **Abstract**

A mobile computer as an electronic apparatus and a control method thereof. The control method of the mobile computer which receives power from an adaptor or a battery includes receiving power from one of the adaptor and the battery and operating in an adaptor mode or a battery mode, performing a predetermined power saving operation, which is disabled in the adapter mode, while operating in the battery mode, and performing the power saving operation in a battery emulation mode by maintaining power supply from the adaptor upon an occurrence of a predetermined mode changing event in the adaptor mode.

## Description

### BACKGROUND

### 1. Field of the Invention

Apparatuses and methods consistent with the exemplary embodiments relate to an electronic apparatus and a control method thereof, and more particularly, to a computer and a control method thereof which operates by receiving power from an adaptor or a battery.

### 2. Description of the Related Art

A mobile computer, such as a laptop computer or mobile communication apparatus, operates by receiving alternating current (AC) power through an adaptor if AC power is available (hereinafter to be called "adaptor mode" or "AC mode") or operates by receiving direct current (DC) power from a battery if AC power is not available (hereinafter, to be called "battery mode" or "DC mode").

In the adaptor mode, power supply is sufficient, and a system setting of the mobile computer is performed to provide performance rather than to set saving power while, in the battery mode, the system is set to use the battery for longer time as power supply is limited.

However, even in the adaptor mode where the power supply is sufficient, reducing energy consumption is essential and preferable. In particular, from the perspective of environmental protection, it is necessary to reduce power consumption in the adaptor mode.

### SUMMARY

The present general inventive concept provides an electronic apparatus to perform a power saving in an adaptor mode, and a control method thereof.

The present general inventive concept also provides a mobile computer and a control method thereof which reduces power consumption in an adaptor mode.

Additional aspects and utilities of the present general inventive concept will be set forth in part in the description which follows and, in part, will be obvious from the description, or may be learned by practice of the present general inventive concept.

The foregoing and/or other features and utilities of the present general inventive concept may be achieved by providing a control method of a mobile computer which receives power from an adaptor or a battery, the control method including receiving power from one of the adaptor and the battery and operating in an adaptor mode or a battery mode, performing a predetermined power saving operation, which is disabled in the adapter mode, while operating in the battery mode, and performing the power saving operation in a battery emulation mode by maintaining power supply from the adaptor upon an occurrence of a predetermined mode changing event in the adaptor mode.

The performing the power saving operation in the battery emulation mode may include determining that the mode changing event occurs if it is determined that a user does not use the mobile computer for predetermined time or more.

The control method may further include transmitting a system control interrupt (SCI) for an operating system (OS) to perform the power saving operation corresponding to the occurrence of the mode changing event.

The control method may further include transmitting a battery emulation command for a microcomputer to transmit the SCI.

The transmitting the battery emulation command may include transmitting the battery emulation command by identifying whether the OS executes a command corresponding to the mode changing event.

The power saving operation may include at least one of central processing unit (CPU) throttling and cutting off/decreasing power of peripheral devices.

The foregoing and/or other features and utilities of the present general inventive concept may also be achieved by providing a mobile computer which receives power from an adaptor or a battery, the mobile computer including at least one device which receives power from one of the adaptor and the battery and performs an operation in an adaptor mode or a battery mode, and a controller which performs a predetermined power saving operation, which is disabled in the adapter mode, in the battery mode, and performs the power saving operation in a battery emulation mode by maintaining power supply from the adaptor upon an occurrence of a predetermined mode changing event in the adaptor mode.

The controller may determine that the mode changing event occurs if it is determined that a user does not use the mobile computer for predetermined time or more.

The controller may include a microcomputer which transmits a system control interrupt (SCI) corresponding to the occurrence of the mode changing event; and an operating system (OS) which performs the power saving operation based on the SCI.

The controller may further include an application program or a device driver which transmits a battery emulation command so that the microcomputer transmits the SCI.

The application program or the device driver may transmit the battery emulation command by identifying whether the OS performs an operation corresponding to the mode changing event.

The power saving operation may include at least one of central processing unit (CPU) throttling and cutting off/decreasing power of peripheral devices.

The foregoing and/or other features and utilities of the present general inventive concept may also be achieved by providing a mobile computer which receives power from an adaptor in an adaptor mode and a battery in a battery mode, the mobile computer including at least one device, and a controller to set a battery mode to control the at least one device to perform a power saving operation when the power is supplied from the battery, and to set a battery emulation mode to control the at least one device to perform the power saving operation when the power is supplied from the adaptor.

The controller may maintain the power saving operation when the battery mode and the adaptor mode are changed to each other.

The controller may not disable the power saving operation when the battery mode is changed to the adaptor mode.

The controller may apply the power saving operation to the battery mode and the adaptor mode.

The controller may apply the power saving operation regardless of the battery mode and the adaptor mode.

The power saving operation may include a first power saving operation and a second power saving operation, and the controller may control the at least one device to perform the first power saving operation in the battery mode and may also control the at least one device to perform the second power saving operation in the battery emulation mode.

The at least one device may include a number of devices, and the controller may apply the first power saving operation to a first set of the devices and the second power saving operation to a second set of the devices.

The foregoing and/or other features and utilities of the present general inventive concept may also be achieved by providing a method of controlling a mobile computer which receives power from an adaptor in an adaptor mode and a battery in a battery mode, the method including setting a battery mode to control the at least one device to perform a power saving operation when the power is supplied from the battery, and setting a battery emulation mode to control the at least one device to perform the power saving operation when the power is supplied from the adaptor.

### BRIEF DESCRIPTION OF THE DRAWINGS

The above and/or other aspects present general inventive concept will become apparent and more readily appreciated from the following description of the exemplary embodiments, taken in conjunction with the accompanying drawings, in which:
FIG. 1 illustrates a view illustrating a mobile computer as an electronic apparatus according to an exemplary embodiment of the present general inventive concept;
FIG. 2 is a block diagram of the mobile computer in FIG. 1;
FIG. 3 illustrates power modes of the mobile computer in FIGS. 1 and 2;
FIGS. 4 to 6 are flowcharts illustrating an operation of the mobile computer in FIGS. 1 and 2;
FIG. 7 is a block diagram illustrating a controller of the mobile computer in FIGS. 1 and 2; and
FIGS. 8 and 9 illustrate an operation of a microcomputer and a SW component in FIG. 7.

### DETAILED DESCRIPTION OF THE EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

Hereinafter, a mobile computer as an electronic apparatus and a control method of controlling the mobile computer according to an exemplary embodiment of the present general inventive concept will be described in detail.

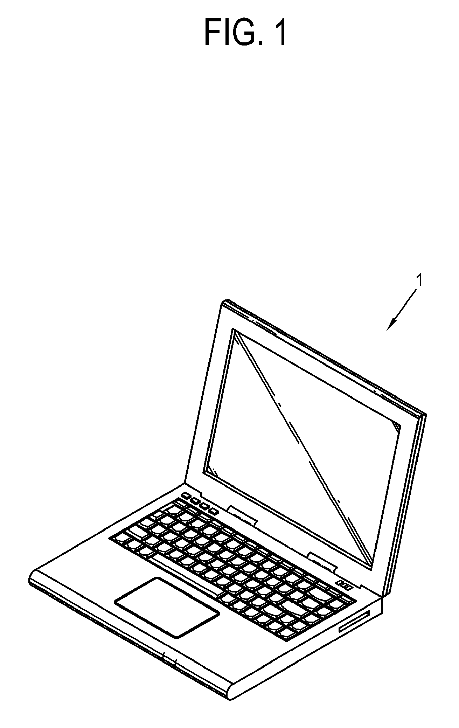

FIG. 1 illustrates a mobile computer 1 as an electronic apparatus according to an exemplary embodiment of the present general inventive concept. The mobile computer 1 in FIG. 1 includes a laptop computer as an example, but the mobile computer 1 according to the present exemplary embodiment is not limited thereto, and may be an apparatus which is portable and has a computer system. It is possible that the electronic apparatus can be a mobile communication apparatus.

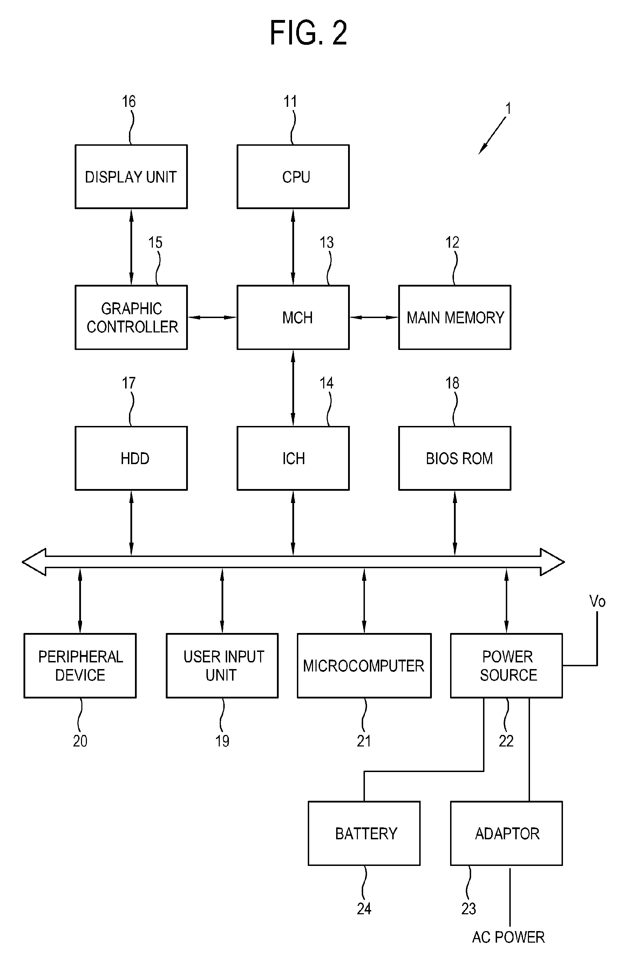

FIG. 2 is a block diagram of the mobile computer 1 in FIG. 1. The mobile computer 1 includes a plurality of devices which operates by receiving power from an adaptor 23 or a battery 24. More specifically, the mobile computer 1 may include a central processing unit (CPU) 11, a main memory 12, a memory controller hub (MCH) 13, an I/O controller hub (ICH) 14, a graphic controller 15 and a display unit 16 as shown in FIG. 2.

The CPU 11 controls overall operations of the mobile computer 1, and executes a code of a computer program loaded upon the main memory 12.

The main memory 12 temporarily stores therein data relating to the performance of the operation of the CPU 11 including a computer program that is executed by the CPU 11. The main memory 12 is a volatile memory, and may include, e.g., a double-data-rate synchronous dynamic random access memory (DDR SDRAM).

The graphic controller 15 processes graphic data, and the display unit 16 displays an image thereon based on graphic data processed by the graphic controller 15. The display unit 16 may include a liquid crystal display (LCD) panel or an organic light emitting diode (OLED) panel.

The MCH 13 interfaces reading and writing of data between the CPU 11 and other elements, and the main memory 12. THE ICH 14 interfaces a communication between the CPU 11 and other devices (refer to reference numeral 19).

The mobile computer 1 may further include a hard disc drive (HDD) 17, a basic input/output system (BIOS) ROM 18, a user input unit 19 and a peripheral device 20.

The HDD 17 is a non-volatile memory which stores therein data in large quantity, and may store an operating system (OS) of the mobile computer 1, a device driver, an application program and a computer program operating in the mobile computer 1, and data necessary for the operation of such computer program and user's data. The HDD 17 may vary including a magnetic disk, a flash memory, etc.

The BIOS ROM 18 is a non-volatile memory such as a programmable read only memory (PROM), an electrically erasable programmable read only memory (EEPROM), and a flash memory, and stores therein a BIOS program performing booting and device-controlling operations and other functions.

The user input unit 19 is a device which receives a user's command, and may include, e.g., a keyboard, a mouse, a touch pad, a tablet and a touch screen.

The peripheral device 20 includes any device which may be built in the mobile computer 1 other than the above devices. For example, the peripheral device 20 may include a CD-ROM, a DVD-ROM, a USB drive, a modem, a network card, a sound card, a speaker, and a microphone, etc. A single peripheral device 20 is illustrated in FIG. 2 for convenience, but the peripheral device 20 may be plural.

The peripheral device 20 may be a device which can be detachably attached to the mobile computer 1 to communicate with components of the mobile computer 1. The peripheral device 20 may receive a power from the mobile computer 1 in the adaptor mode and/or the battery mode. It is possible that a power mode of the peripheral device 20 can controlled by the mobile computer 1 when other components are controlled according to the power mode.

The mobile computer 1 further includes a power source 22 which supplies power with a level required for corresponding devices (components or units) of the mobile computer 1 as described in FIG. 1. The power source 22 converts power supplied by the adaptor 23 or the battery 24, and outputs an operating voltage Vo at a predetermined level to be supplied to corresponding components (devices) of the mobile computer 1 as describe in FIG. 1. The operating voltage Vo which is output by the power source 22 is used as operating power of each device. The mobile computer 1 has an adaptor mode in which it operates by receiving AC power from the adaptor 23, and a battery mode in which it operates by receiving DC power from the battery 24.

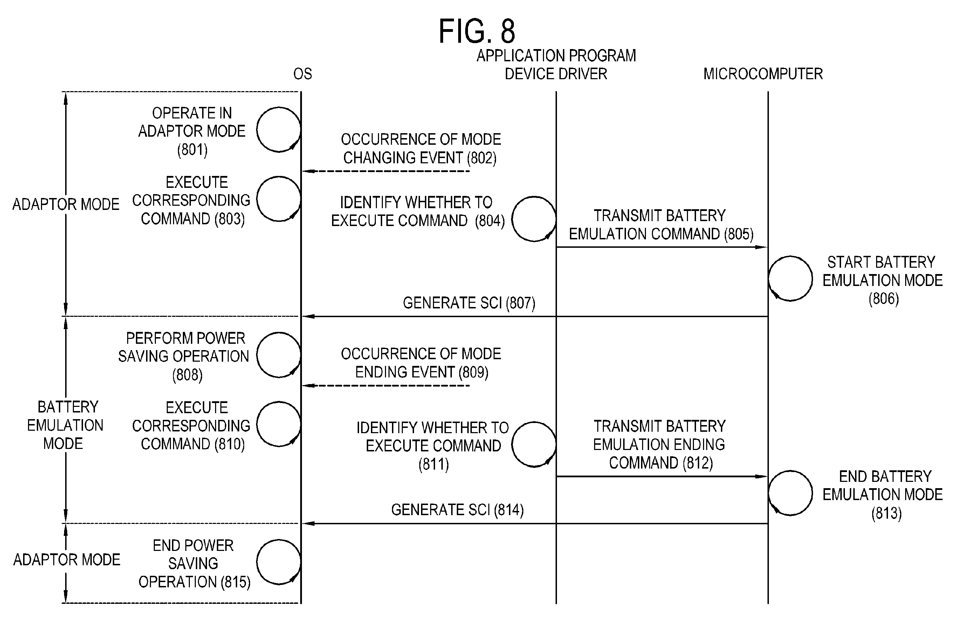

The adapter mode puts a system operation of the mobile computer 1 in performance first rather than saving power. In the battery mode, the system operation is set to the power saving rather than the performance. The mobile computer 1 performs an operation to save power in the battery mode (hereinafter, to be called "power saving operation"), but the power saving operation is disabled in the adapter mode (see a reference numeral of 815 in FIG. 8). A classic power saving operation performed in the battery mode by the mobile computer 1 includes a throttling or dynamic frequency scaling of the CPU 11, a CPU deeper sleep mode, etc. The power saving operation performed by the mobile computer 1 in the battery mode is not limited to the foregoing, and may include any type of power saving operations including cutting off power supplied to devices, degrading performance of devices to save power (for example, USB selective suspension, low clock/power down mode of a video device), any operation to reduce a power consumption of the power used in the devices (components or units) of the mobile computer 1, etc. However, the power saving operation in the battery mode may be different from a typical power saving function enabled regardless of a power mode. That is, the power saving operation may be disabled in the adapter mode but enabled in the battery mode

The mobile computer 1 may perform the power saving operation of the battery mode in a predetermined circumstance even if it receives sufficient power from not the battery 24 but the adaptor 23. Accordingly, power consumption may be minimized in the case that the sufficient power is supplied from the adapter 23 as well as in the battery mode, and such power saving may meet a demand for energy saving for the purpose of the environmental protection. Hereinafter, a power mode in which the mobile device 1 performs the power saving operation of the battery mode while receiving power from the adaptor 23 is called a "battery emulation mode" or "DC emulation mode" to distinguish between the adaptor mode and the battery mode.

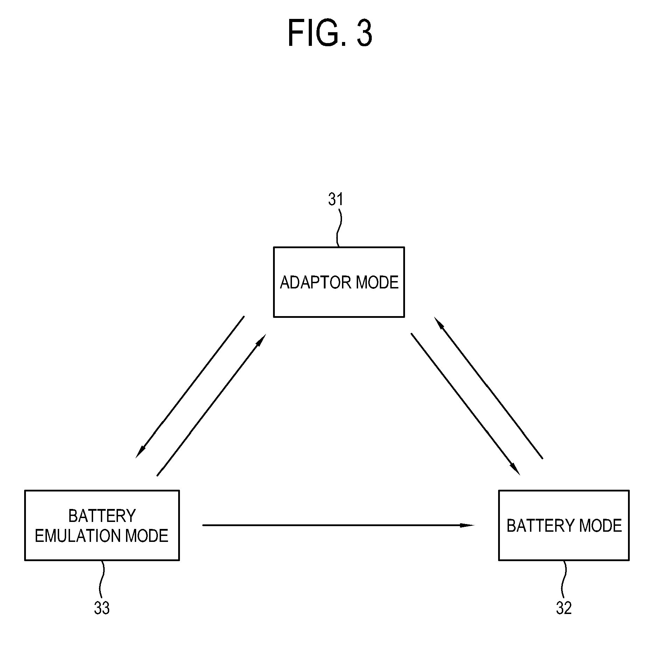

The battery emulation mode of the mobile computer 1 will be described in detail with reference to FIG. 3. FIG. 3 illustrates power modes of the mobile computer 1 in FIGS. 1 and 2. As described above, the mobile computer 1 includes a battery emulation mode 33 in addition to the adaptor mode 31 and the battery mode 32.

As illustrated in FIG. 3, the mobile computer 1 may change the power mode between the adaptor mode 31 and the battery mode 32. For example, the mobile computer 1 may change the power mode from the adaptor mode 31 to the battery mode 32 if power supply from the adaptor 23 is not available, and vice versa.

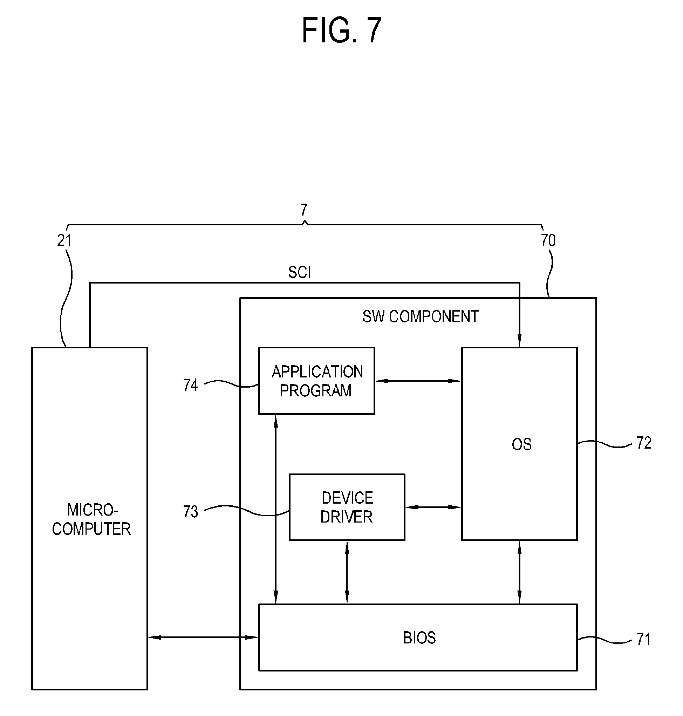

Further, the mobile computer 1 may change the power mode between the adaptor mode 31 and the battery emulation mode 33 in a specific condition. The mobile computer 1 may change the power mode from the adaptor mode 31 to the battery emulation mode 33 if power saving is necessary. It is possible that the mobile computer 1 may change the power mode from the battery emulation mode 33 to the adaptor mode 31 if power saving is unnecessary or improved performance takes precedence over power saving. The mobile computer 1 changes the power mode from the battery emulation mode 33 to the battery mode 32 if it may not receive AC power from the adaptor 23 anymore and thus may not maintain the battery emulation mode 33. The battery emulation mode 33 may correspond to the battery mode 32 in terms of software (S/W) component such as an operating system (OS) to perform a power saving operation, and the battery emulation mode 33 may also correspond to the adapter mode 31 in terms of a hardware (H/W) component since the power is supplied from the adaptor 23, which will be described later in more detail with reference to FIGS. 7, 8, and 9. Thus, the battery emulation mode 33 can utilize all power saving functions operable by a software component like the battery mode 32.

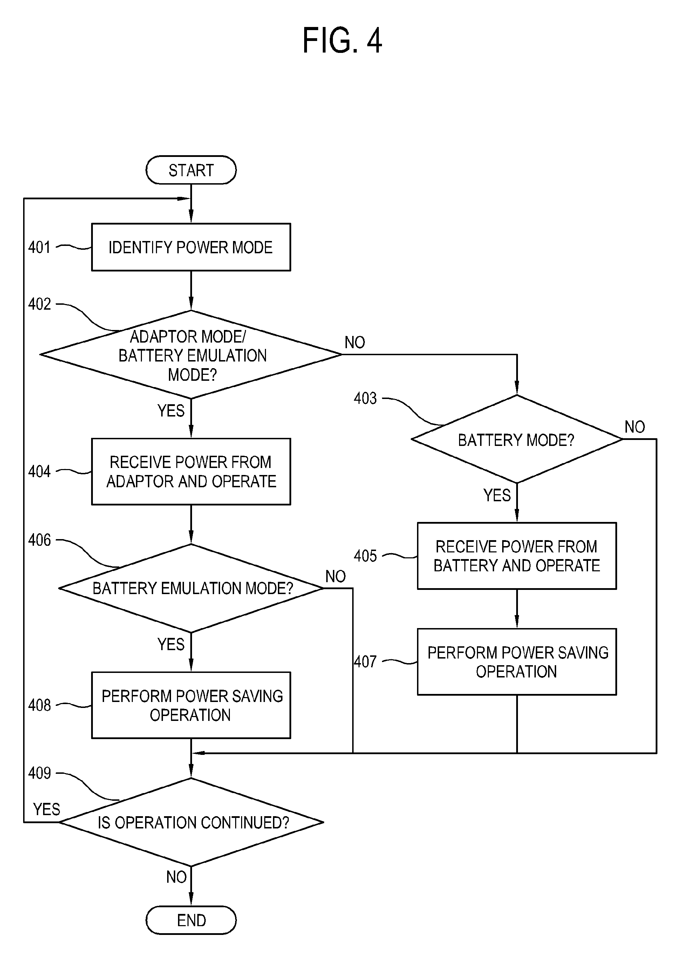

The operation of the mobile computer 1 will be described in detail with reference to FIGS. 4, 5, and 6. FIG. 4 is a flowchart illustrating the operation of the mobile computer 1 in FIGS. 1, 2 and 3. The mobile computer 1 identifies or determines a power mode in operation 401. If the power mode is the adaptor mode (YES at operation 402), the mobile computer 1 receives power from the adaptor 23 and performs its operation in operation 404. If the power mode is not the adaptor mode (NO at operation 402), but the battery mode (YES at operation 403), the mobile computer 1 receives power from the battery 24 and performs its operation in operation 405.

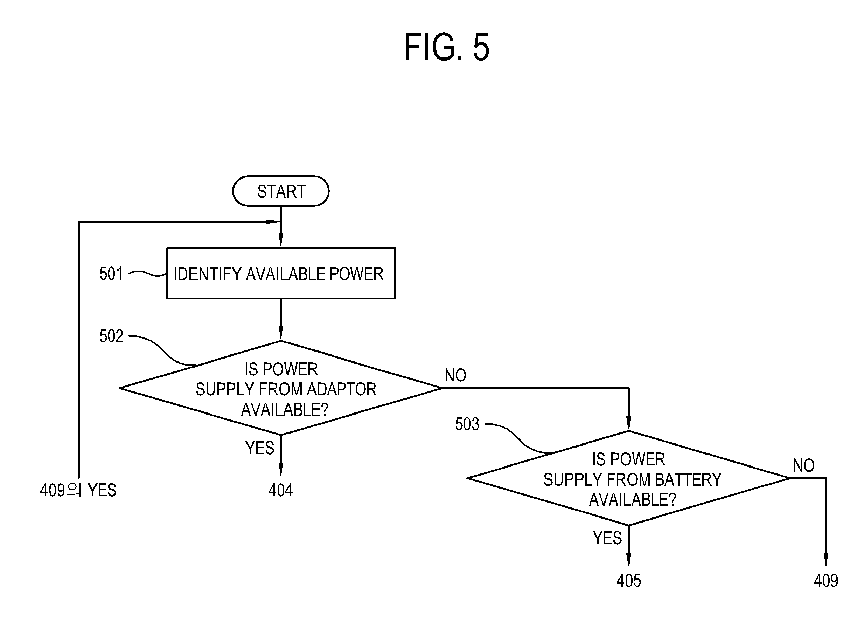

The operations 401 through 403 in FIG. 4 may be replaced by operations 501 through 503 in FIG. 5. As illustrated in FIG. 5, the mobile computer 1 identifies or determines available power in operation 501, and if power supply from the adaptor 23 is available (YES at operation 502), the mobile computer 1 may receive power from the adaptor 23 and perform its operation in operation 404. If the power supply from the adaptor 23 is not available (NO at operation 502), and the power supply from the battery 24 is available (YES at operation 503), the mobile computer 1 may receive power from the battery 24 and perform its operation in operation 405.

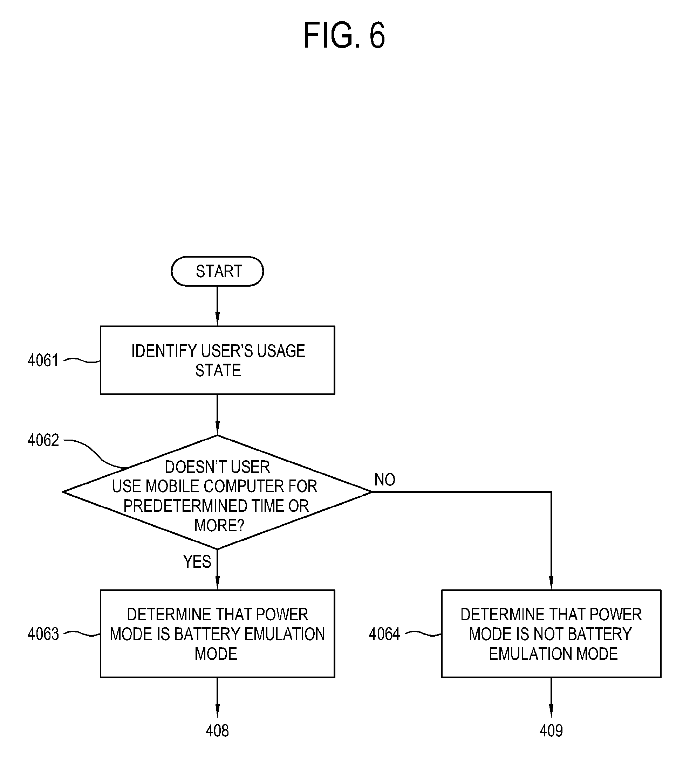

Returning to FIG. 4, in the adaptor mode (after the operation 404), the mobile computer 1 identifies or determines whether the power mode is the battery emulation mode in operation 406. If the power mode is the battery emulation mode (YES at operation 406), the mobile computer 1 performs the power saving operation as if in the battery mode in operation 408. FIG. 6 illustrates a specific example of the operation of identifying whether the power mode is the battery emulation mode in FIG. 4. As shown therein, the mobile computer 1 identifies or determines a user's usage state in operation 4061. If it is determined that a user does not use the mobile computer 1 for predetermined time or more (YES at operation 4062), the mobile computer 1 determines that the power mode is the battery emulation mode in operation 4063. If it is determined that a user uses the mobile computer 1 (No at operation 4062), the mobile computer 1 determines that the power mode is not the battery emulation mode in operation 4064. Accordingly, the mobile computer 1 performs the power saving operation only when a user does not use the mobile computer 1, and thereby to downgrade performance by the power saving and to improve user convenience.

Returning to FIG. 4, in the battery mode (after the operation 405), the mobile computer 1 performs the power saving operation in operation 407.

After the operations 408 and 407 and YES at the operation 403, the mobile computer 1 performs the operation 401 if it continues to perform its operation (YES at operation 408), or ends its operation if it does not continue the operation (NO at operation 409).

At the operation 403 after the operation 408, the mobile computer 1 performs the operation 404 in the battery emulation mode (YES at the operation 402) as well as the adaptor mode.

Referring to FIG. 7, a detailed configuration of the mobile computer 1 which is described with reference to FIGS. 1 to 6 will be described. As illustrated in FIGS. 2 and 7, the mobile computer 1 may further include a microcomputer 21. The microcomputer 1 is a processor unit which includes an additional memory to store a program therein. The reference numeral 70 refers to a SW component of the mobile computer 1, and the SW component 70 may include a BIOS 71, an OS 72, a device driver 73 and an application program 74 as described above. All or a part of the SW component 70 is loaded to a RAM 12, and is executed by the CPU 11 in a given circumstance. Hereinafter, even a simple reference to the BIOS 71, the OS 72, the device driver 73 and the application program 74 means an execution of the program by the CPU 11 even if any special reference is not made. A combination of the microcomputer 21 and the SW component 70 is an example of a controller 7 according to the exemplary embodiment of the present general inventive concept.

The BIOS 71, the OS 72, the device driver 73 and the application program 74 may correspond to programs or SW components stored in the HDD 17 and the BIOS ROM, respectively, as illustrated in FIG. 2, so that the battery emulation mode can be performed. It is possible that the mobile computer 1 may include a separate unit corresponding to the SW component 70 to store the programs independently from the HDD and/or the BIOS ROM of FIG. 2 and to communicate with the microcomputer 21 for the battery emulation mode. It is also possible that the microcomputer 21 and the SW component 70 can be formed in a single unit as the controller 7.

When the controller 7 receives from the power source 22 a signal indicating that the power is supplied from the adaptor 23 or the adaptor 23 is connected to the power source, the controller 7 generates and output a signal to control other devices or components to perform the battery emulation mode according to an operation of the SW component 70.

It is possible that the controller 7 may control the mobile computer 1 to perform the battery emulation mode regardless of the power mode, for example, the adaptor mode and the battery mode. That is, the controller 7 may set the mobile computer 1 as the battery mode when the power is supplied from the adaptor or the battery.

It is also possible that the power saving operation may be used in the battery emulation mode and the battery mode. However, the power saving operation may include a first power saving operation which can be used in the battery mode and a second power saving operation which can be used in the battery emulation mode. The first power saving operation of the battery mode may be the same as the second power saving operation of the battery emulation mode. However, the first power saving operation may be different from the second power saving operation. That is, the first power saving operation of the battery mode can controls a first number of devices (components or units) of the mobile computer 1 to be controlled for the power saving operation, and the second power saving operation can control a second number of devices (components or units) of the mobile computer 1 to be controlled for the power saving operation. The first number and the second number may be same. But, it is possible that the first number is different from the second number. That is, the display unit 16 and the peripheral device 20 (or the HDD 17) of the mobile computer 1 is controlled for the first power saving operation of the battery mode, and the display unit 16 is controlled for the second power saving operation of the battery emulation mode. In this case, the peripheral device 20 (or the HDD 17) may not be controlled for the power saving operation according to the second power saving operation of the battery emulation mode. The first power saving operation and the second power saving operation may be set differently from each other, for example, different periods of a user's usage state to be monitored, etc.

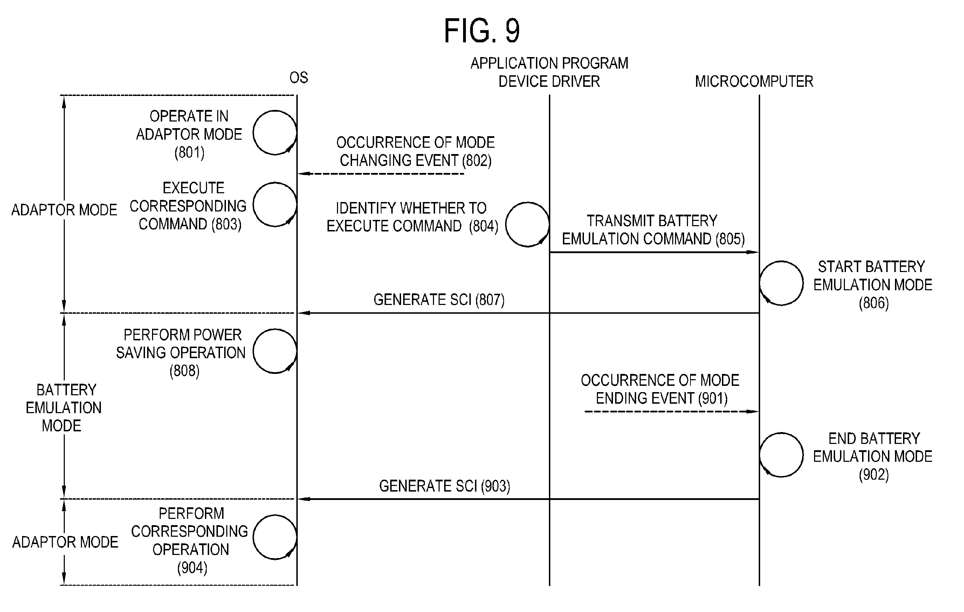

Referring to FIGS. 8 and 9, a detailed operation of the microcomputer 21 and the SW component 70 will be described. Referring to FIG. 8, the OS 72 identifies or determines a user's usage state while operating in the adaptor mode in operation 801. If a user does not use the mobile computer 1 for predetermined time or more (hereinafter, to be also called "occurrence of a mode changing event") in operation 802, the OS 72 executes a predetermined command corresponding thereto in operation 803. Such command may include operating a screen saver or turning off a monitor.

The application program 73 or the device driver 74 monitors whether the OS 72 executes the command, and if it is identified that the OS 72 executes the command in operation 804, the application program 73 or the device driver 74 transmits a battery emulation command to the microcomputer 21 in operation 805. Such transmission of the command may be performed by the BIOS 71.

Upon receiving the battery emulation command, the microcomputer 21 starts the battery emulation mode in operation 806. The microcomputer 21 generates a system control interrupt (SCI) which informs the OS 72 of the change from the adaptor mode to the battery mode for the emulation of the battery mode even if the power mode is not the battery mode in operation 807. The microcomputer 21 changes a state of AC power and a state of the battery and its capacity, and other information to be consistent with the battery mode.

The OS 72 recognizes that the adaptor mode is changed to the battery mode based on the SCI, and performs the power saving operation by setting devices in compliance with the battery mode based on the information of the AC power, the battery and its capacity in operation 808. After the setting is completed, the devices perform an operation to save power as if in the battery mode. That is, the power mode is the battery emulation mode.

The OS 72 continues to identify a user's usage state while operating in the battery emulation mode. If a user uses the mobile computer 1 again (hereinafter to be also called "occurrence of mode ending event") in operation 809, the OS 72 executes a predetermined command in operation 810. For example, the OS 72 may cancel the screen saver in operation or turn on the monitor again.

If it is identified that the OS 72 executes the command in operation 811, the application program 73 or the device driver 74 transmits a battery emulation ending command to the microcomputer 21 in operation 812.

Upon receiving the battery emulation ending command, the microcomputer 21 ends the battery emulation mode in operation 813. The microcomputer 21 generates an SCI to inform the OS 72 of the change from the battery mode to the adaptor mode to end the battery emulation mode in operation 814. The microcomputer 21 restores the state of the AC power, the state of the battery and its capacity and other information to be consistent with the adaptor mode.

The OS 72 recognizes that the battery mode is changed to the adaptor mode based on the SCI, and sets the devices in compliance with the adaptor mode in operation 815. If the setting is completed, the devices operate with high performance again.

Referring to FIG. 9, another example will be described. Configurations which have the same reference numerals as in FIG. 8 are similar to those in FIG. 8 and description thereof will be omitted.

The microcomputer 21 identifies whether a mode ending event occurs in a battery emulation mode in operation 901. The occurrence of the mode ending event may include cutting off power supplied by the adaptor 23. The microcomputer 21 ends the battery emulation mode, and changes to the battery mode upon the occurrence of the mode ending event in operation 902. As the OS 72 already recognizes the battery mode, the microcomputer 21 does not generate the SCI corresponding to the change to the battery mode. Instead, the microcomputer 21 generates an SCI informing the change of the battery state in operation 903. The OS 72 performs the operation corresponding to the changed battery state based on the SCI in operation 904. Accordingly, the power mode is the battery mode.

As above, even if the OS 72 does not support the power saving function of the battery mode in the adaptor mode, the emulation in the battery mode centering on the microcomputer 21 enables more enhanced power saving in the adaptor mode.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

As described above, a mobile computer and a control method thereof according to the present general inventive concept may save power even in an adaptor mode as well as in a battery mode. With this, power consumption is more reduced, even in the adaptor mode as well as the battery mode.

Although a few exemplary embodiments of the present general inventive concept have been shown and described, it will be appreciated by those skilled in the art that changes may be made in these exemplary embodiments without departing from the principles and spirit of the general inventive concept, the range of which is defined in the appended claims and their equivalents.

## Claims

1. A control method of a mobile computer which receives power from an adaptor or a battery, the control method comprising:
receiving power from one of the adaptor and the battery and operating in an adaptor mode or a battery mode;
performing a predetermined power saving operation, which is disabled in the adapter mode, while operating in the battery mode; and
performing the power saving operation in a battery emulation mode by maintaining power supply from the adaptor upon an occurrence of a predetermined mode changing event in the adaptor mode.

2. The control method according to claim 1, wherein the performing the power saving operation in the battery emulation mode comprises determining that the mode changing event occurs if it is determined that a user does not use the mobile computer for predetermined time or more.

3. The control method according to claim 1, further comprising:
transmitting a system control interrupt (SCI) for an operating system (OS) to perform the power saving operation corresponding to the occurrence of the mode changing event.

4. The control method according to claim 3, further comprising:
transmitting a battery emulation command for a microcomputer to transmit the SCI.

5. The control method according to claim 4, wherein the transmitting the battery emulation command comprises transmitting the battery emulation command by identifying whether the OS executes a command corresponding to the mode changing event.

6. The control method according to claim 1, wherein the power saving operation comprises at least one of central processing unit (CPU) throttling and cutting off/decreasing power of peripheral devices.

7. A mobile computer which receives power from an adaptor or a battery, the mobile computer comprising:
at least one device which receives power from one of the adaptor and the battery and performs an operation in an adaptor mode or a battery mode; and
a controller which performs a predetermined power saving operation, which is disabled in the adapter mode, in the battery mode, and performs the power saving operation in a battery emulation mode by maintaining power supply from the adaptor upon an occurrence of a predetermined mode changing event in the adaptor mode.

8. The mobile computer according to claim 7, wherein the controller determines that the mode changing event occurs if it is determined that a user does not use the mobile computer for predetermined time or more.

9. The mobile computer according to claim 7, wherein the controller comprises:
a microcomputer which transmits a system control interrupt (SCI) corresponding to the occurrence of the mode changing event; and
an operating system (OS) which performs the power saving operation based on the SCI.

10. The mobile computer according to claim 9, wherein the controller further comprises an application program or a device driver which transmits a battery emulation command so that the microcomputer transmits the SCI.

11. The mobile computer according to claim 10, wherein the application program or the device driver transmits the battery emulation command by identifying whether the OS performs an operation corresponding to the mode changing event.

12. The mobile computer according to claim 7, wherein the power saving operation comprises at least one of central processing unit (CPU) throttling and cutting off/decreasing power of peripheral devices.
